# EUROPEAN PATENT APPLICATION

(11) **EP 1 529 625 A1**
(43) Date of publication of application: **11.05.2005**
(21) Application number: 04026158.8
(22) Date of filing: 04.11.2004
(51) Int. Cl.: B29D 11/00

(54) **Mold for making contact lenses**

(30) Priority: 06.11.2003 JP 2003377078
(71) Applicant: Kuraray Medical Inc., Kurashiki-shi, Okayama 710-8622 (JP)
(72) Inventor: Baba, Naoya, Kurashiki-shi Okayama 710-8622 (JP); Makabe, Takashi, Kurashiki-shi Okayama 710-8622 (JP)
(74) Representative: VOSSIUS & PARTNER

(57) **Abstract**

To provide a mold assembly for molding a contact lens having an excellent optical performance, which is accomplished by suppressing the axial misalignment brought about by the relative displacement between the male and female molds during the molding operation, the mold assembly has a lens molding cavity (30) defined therein when the male and female molds (1, 2) are joined together in an axial direction. A pair of mating faces (12, 22) are defined in the male and female molds (1, 2) at locations in the vicinity of outer peripheral edges of molding surface areas (11, 21) in the male and female molds (1, 2), respectively. Each face being in the form of an annular face lying substantially parallel to the axial direction. A pair of abutment faces (13, 23) are positioned radially outwardly of the mating faces (12, 22) and are, when the male and female molds (1, 2) are joined together, operable to position the male and female molds (1, 2) relative to each other in the axial direction.

## Description

The present invention relates to a mold assembly suitable for making contact lenses.

### (Description of the Prior Art)

For the molding of contact lenses, a mold assembly made of male and female molds both made of a plastic material such as, for example polypropylene is generally utilized in order to reduce the cost incurred in making the contact lenses. As is well known to those skilled in the art, the mold assembly has an abutment feature defined at a location corresponding to the peripheral edge of the eventually formed contact lens, which abutment feature includes abutment faces formed on the male and female molds, respectively, and abutting to each other in an axial direction of the mold assembly. These abutment faces in the male and female molds together with respective molding surface areas of the male and female molds form a molding cavity in the molding assembly. The contact lens can be obtained when a contact lens material is filled into the molding cavity and is allowed to polymerize.

Where the molding cavity is defined relying on only one abutment feature as described above, the male and female molds both. made of the plastic material tend to radially displace relative to each other under the influence of heat evolved when the contact lens material undergoes polymerization. Once this displacement occurs, misalignment occurs between the male and female molds to such an extent that the optical performance of the eventually formed contact lens would be adversely affected. For example, the misalignment between the male and female molds would eventually result in that the focal point of the eventually formed contact lens will be eccentrically displaced from the optical axis thereof. When one wears such contact lenses, the wearer's ophthalmic nerve system functions to adjust the position of the eyeballs to compensate for the displacement of the focal points and, accordingly, the wearer may suffer from headache.

The use of one or more mating features on the male and female molds has been proposed in the art. For example, WO87/04390 discloses, as reproduced in a longitudinal sectional representation in Fig. 6 of the accompanying drawings, a mold assembly including male and female molds 40 and 50 adapted to be joined together in an axial direction A with the male mold 40 received within the female mold 50 to -define a molding cavity 60 between respective molding surface areas 41 and 51 for the molding of a contact lens. The male and female molds 40 and 50 have abutment faces 42 and 52 defined in an outer surface portion of the male mold 40 and in an inner surface portion of the female mold 50, respectively. These abutment faces 42 and 52 define an outer perimeter of the molding cavity 60 when the male and female molds 40 and 50 are joined together.

The abutment faces 42 and 52 employed in the male and female molds 40 and 50 are in the form of a substantially flat annular horizontal surface area so that, when the male and female molds 40 and 50 are joined together, the abutment faces 42 and 52 are brought into tight contact with each other to thereby seal off the molding cavity 60.

In order to ensure the tight joint between the male and female molds 40 and 50, the male mold 40 has a first male mating face 43 defined in continuation with the flat annular surface area, that is, the abutment face 42, so as to extend perpendicular thereto and in a direction parallel to the axial direction A. The male mold 40 also has a second male mating face 44 defined at a location radially outwardly of the first male mating face 43, and in an upper shoulder portion of the male mold 40, so as to extend in a direction parallel to the axial direction A. Similarly, the female mold 50 has a first female mating face 53 defined in continuation with the flat annular surface area, that is, the abutment face 52, so as to extend perpendicular thereto and in a direction parallel to the axial direction A and also has a second female mating face 54 defined at a location radially outwardly and axially upwardly of the first mating face 53, and in an upper shoulder portion of the female mold 50, so as to extend in a direction parallel to the axial direction A. The first male and female mating faces and the second male and female mating faces mate with each other, respectively.

With the prior art mold assembly of the structure described above, when the biocompatible lens material is filled into the molding cavity 60 while the male and female molds 40 and 50 are joined together under a predetermined pressure, polymerization of the filled contact lens material takes place to eventually form the contact lens.

It has, however, been found that the prior art mold assembly is ineffective in that the relative displacement between the male and female molds 40 and 50 during the molding of the contact lens cannot be avoided completely for the following reasons. The horizontally lying abutment surfaces 42 and 52 formed in the respective outer perimeters of the lens molding surface areas 41 and 51 in the male and female molds 40 and 50 are each in the form of the substantially horizontally lying flat annular surface area lying perpendicular to the axial direction A. Accordingly, a gap is formed inevitably between the first mating faces 43 and 53, both lying parallel to the axial direction A, and also between the second mating faces 44 and 54 both similarly lying parallel to the axial direction A in order for the male and female molds 40 and 50 to be held in tight contact with each other through the abutment faces 42 and 52. Under this dimensional condition it may occur that, because of heat evolved during the polymerization of the filled contact lens material within the molding cavity 60, the male and female molds 40 and 50 displace relative to each other in the radial direction such a distance as afforded by the size of the gaps present between the first mating faces 43 and 53 and also between the second mating faces 44 and 54. Accordingly, the prior art design suggested in the above mentioned patent publication is incapable of completely avoiding the axial misalignment between the male and female molds 40 and 50. In particular, the axial misalignment is conspicuous under the influence of thermal expansion when the polymerization is effected by the utilization of a heating technique.

In view of the foregoing problems and inconveniences, the present invention has for its object to provide an improved mold assembly effective to mold a contact lens having an excellent optical performance, which is accomplished by suppressing the axial misalignment brought about by the relative displacement between the male and female molds during the molding operation.

In order to accomplish the foregoing object of the present invention, there is provided a mold assembly for use in making a contact lens, which includes male and female molds adapted to be joined together in an axial direction. The male and female molds, when they are joined together, define a molding cavity complemental in shape to the contact lens. A pair of mating faces to be mated with each other are defined in the male and female molds, respectively. Each mating face is formed at location in the vicinity of or adjacent an outer peripheral edge of a molding surface area in the associated male or female molds in the form of an annular face lying substantially parallel to the axial direction. A pair of abutment faces to be abutted to each other are defined in the male and female molds, respectively. Each abutment face is formed at a location radially outwardly of the mating face and operable, when the male and female molds are joined together, to position the male and female molds relative to each other in the axial direction.

According to the present invention, since the mating faces are formed in the vicinity of the respective outer peripheral edges of the molding surface areas in the form of an annular face lying substantially parallel to the axial direction, in combination with the abutment faces positioned radially outwardly of the mating faces, any undesirable displacement of one of the male and female molds relative to the other thereof in a radial direction, or a direction laterally of the axial direction, can be effectively prevented to thereby inhibit a misalignment of the male mold relative to the female mold. Because of this, the contact lens having an excellent optical performance, which is substantially free from an eccentricity, i.e., offset of the focal point from the optical axis, can be obtained.

If the mold assembly according to the present invention is utilized where the contact lenses are made by means of the thermal polymerization likely to result in the misalignment, such an advantage can be appreciated that the misalignment can be assuredly avoided.

In a preferred embodiment of the present invention, the male and female molds may include a pair of guide faces. Each guide face is positioned radially outwardly of the abutment face and operable to guide the male and female molds in a mating direction. This structural feature is particularly advantageous in that the male and female molds can be smoothly and effectively guided relative to each other during the mating of those molds together.

In another preferred embodiment of the present invention, the mold assembly of the structure described above may also include a plurality of anchoring projections formed in one of the male and female molds and a corresponding number of anchoring holes formed in the other of the male and female molds. Those anchoring projections are, when the male and female molds are joined together, operable to engage in the corresponding anchoring holes to avoid a relative displacement of the male and female molds in a radial direction generally perpendicular to the axial direction.

Engagement of the anchoring projections in the corresponding anchoring holes during the molding of the contact lens is effective to forcibly avoid an undesirable displacement of one of the male and female molds relative to the other in a radial direction, making it possible to provide the contact lens having an excellent optical performance.

The mold assembly of the structure hereinabove described and hereinafter disclosed is particularly suited for use in the molding of the contact lenses by means of a thermal polymerization.

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a bottom plan view of a male mold forming a part of a mold assembly for the formation of a contact lens according to a preferred embodiment of the present invention;
Fig. 2 is a diagram of the male mold shown in part in a side sectional view and in part in a side view;
Fig. 3 is a plan view of a female mold forming another part of the mold assembly;
Fig. 4 is a diagram of the female mold shown in part in a side sectional view and in part in a side view;
Fig. 5 is a longitudinal sectional view of the mold assembly, showing the manner in which the male and female molds are joined together; and

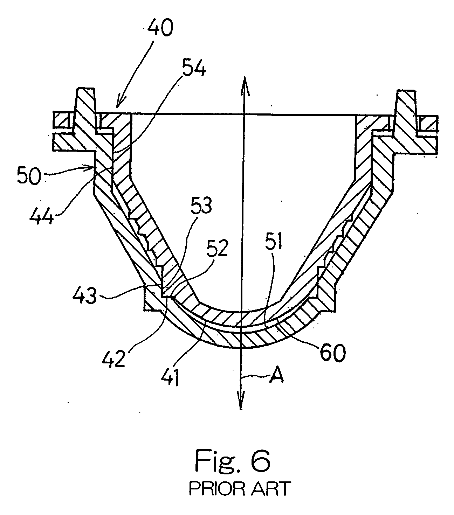

Fig. 6 is a longitudinal sectional view of the prior art mold assembly.

Hereinafter, a preferred embodiment of the present invention will be described in detail with reference to the accompanying drawings.

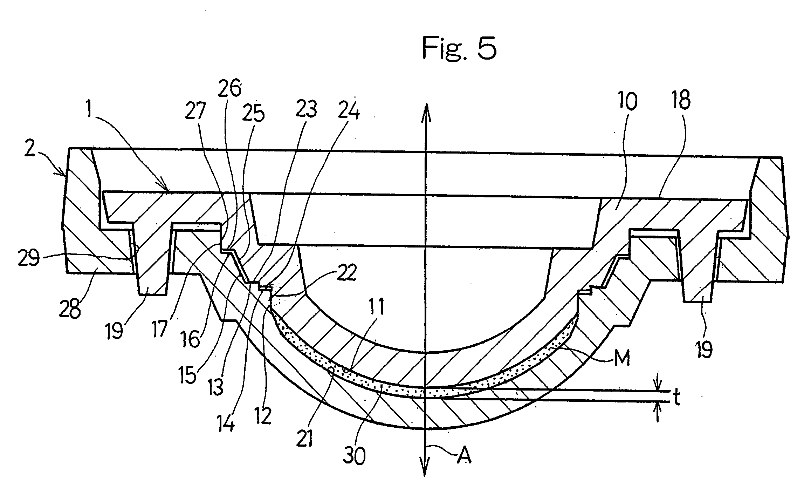

A mold assembly for the formation of a contact lens according to the preferred embodiment of the present invention includes male and female molds 1 and 2 shown in Fig. 5, that can be joined together as will be described later.

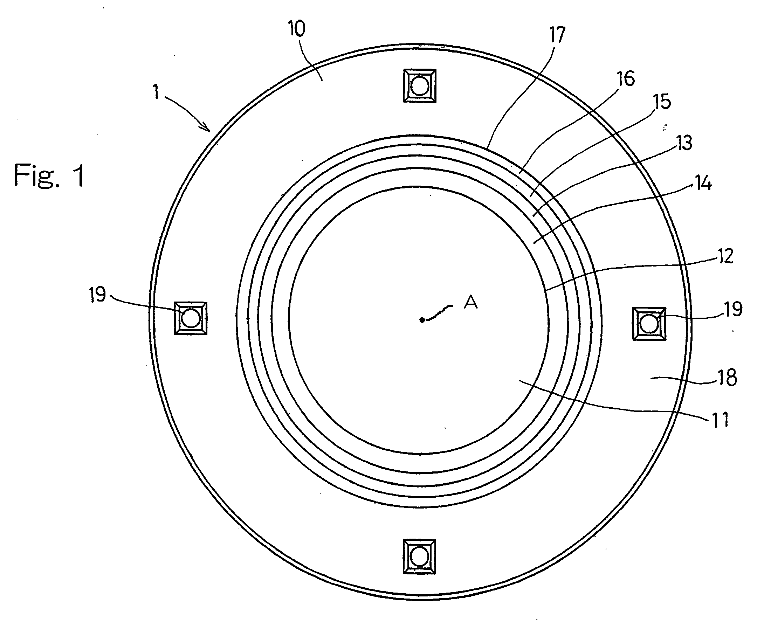

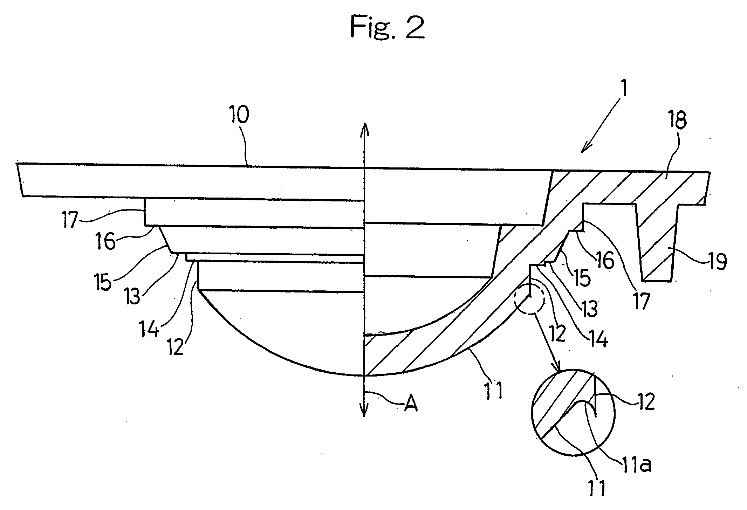

The male mold 1 includes a male mold body 10 of a disk shape in a bottom view as shown in Fig. 1. The male mold body 10 has a generally bowl-like configuration, as shown in Fig. 2, that is substantially rotational symmetrical with respect to an axis A passing through the geometric center. This male mold body 10 also has a generally semi-spherical outer surface bulging downwardly in an axial direction or a direction parallel to the axis A, and a portion of this generally semi-spherical outer surface serves as a substantially round, spherically convexed molding surface area 11 that defines the concaved surface of an eventually formed contact lens. The generally semi-spherical outer surface of the male mold body 10 further has a male mating face 12 defined in the vicinity of, or more specifically, at a location upwardly of the outer perimeter of the molding surface area 11 in the form of an annular upright wall lying substantially parallel to the axis A, and an annular male abutment face 13 defined at a location upwardly of and radially outwardly of the male mating face 12 in the form of a flat transverse wall lying perpendicular to the axis A.

As will become clear from the subsequent description, the annular male abutment face 13 is adapted to be brought into tight contact with a corresponding annular seat, defined in the female mold 2 as will be described later, when the male and female molds 1 and 2 are joined together, to thereby position the male mold 1 relative to the female mold 2 in a direction parallel to the axis A.

In the illustrated embodiment, the outer surface of the male mold body 10 furthermore has a first annular male shoulder 14 positioned generally intermediate between the male mating face 12 and the annular male abutment face 13 and protruding radially outwardly from an upper edge of the male mating face 12 so as to lie perpendicular to the male mating face 12 and at a level one step below the male abutment face 13.

The outer surface of the male mold body 10 is formed with an annular male inclined face 15 defined in a region upwardly of the male abutment face 13 and so inclined as to flare upwardly from an annular outer edge of the male abutment face 13 to an radially inner edge of a second annular male shoulder 16 that protrudes radially outwardly from an upper edge of the male inclined face 15. An annular male upright guide face 17 lying substantially parallel to the axis A is formed in a region of the .outer surface of the male mold body 10 immediately above the second annular male shoulder 16 so as to extend upwardly from a radially outer edge of the second annular male shoulder 16 and lies perpendicular to the second male annular shoulder 16 or parallel to the axis A. This annular upright guide face 17 cooperates with a corresponding annular upright guide face, defined in the female mold 2 as will be described later, to guide the movement of the male and female molds 1 and 2 relative to each other in the axial direction when the male and female molds 1 and 2 are joined together.

In addition, in the illustrated embodiment, the male mold body 10 has its annular top edges formed integrally with a radially outwardly extending flange 18. This flange 18 has a plurality of, for example, four so far shown, anchor projections 19 formed integrally therewith so as to extend downwardly in the axial direction.

As clearly shown in an enlarged scale in Fig. 2 showing a portion of the outer surface of the male mold body 10 in the vicinity of the outer perimeter of the molding surface area 11, an annular junction between the outer perimeter of the molding surface area 11 and a lower edge of the male mating face 12 is formed with a groove 11a of a generally inverted U-shape opening downwardly and having its bottom curved in a predetermined curvature, so that the eventually formed contact lens as will be described later, can have its outer edge rounded.

Thus, it will readily be seen that the outer surface of the male mold body 10 is stepped in a region bound between the substantially round, spherically convexed molding surface area 11 bulging downwardly and the radially outwardly extending flange 18, to provide the male mating face 12, the first annular shoulder male 14, the annular male abutment face 13, the annular male inclined face 15, the second annular male shoulder 16 and the annular male guide face 17, to describe sequentially from below.

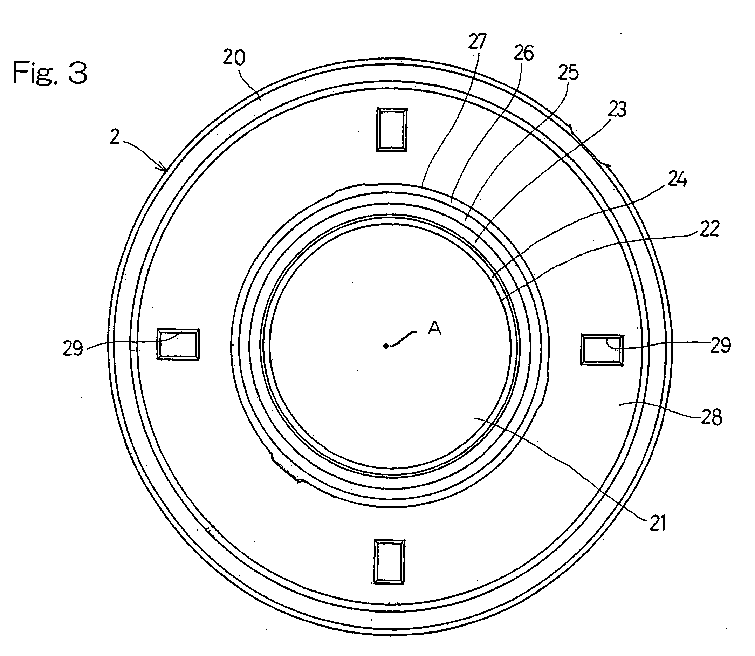

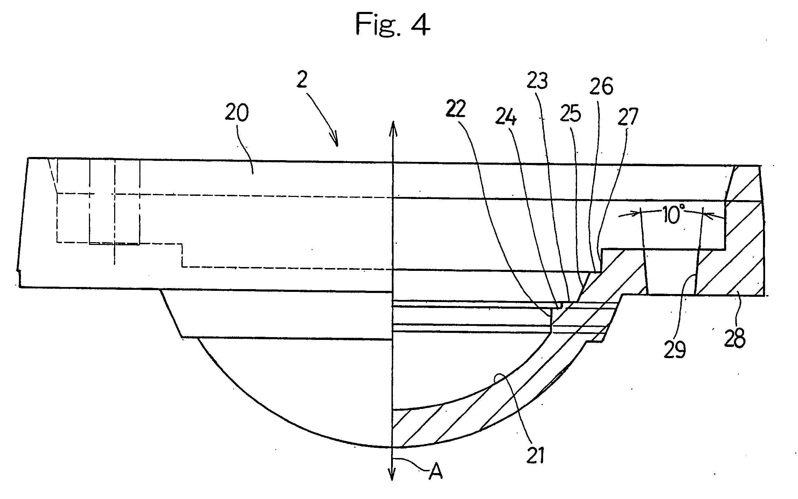

As shown in Fig.3, the female mold 2 includes a female mold body 20 of a disk shape in a plan view. The female mold body 20 has a generally bowl-like configuration, as shown in Fig. 4, that is substantially rotational symmetrical with respect to the axis A passing through the geometric center. This female mold body 20 also has a generally semi-spherical inner surface depressing downwardly in the axial direction, and a portion of this generally semi-spherical inner surface serves as a substantially round, spherically concaved molding surface area 21 that defines the convexed surface of an eventually formed contact lens. The generally semi-spherical inner surface of the female mold body 20 further has a female mating face 22 defined in the vicinity of the outer perimeter of the molding surface area 21 in the form of an annular upright wall lying substantially parallel to the axis A, and an annular female abutment face 23 defined at a location upwardly of and radially outwardly of the engagement feature 22 in the form of a flat transverse wall lying perpendicular to the axis A.

As will become clear from the subsequent description, the engagement feature 22 defined in the female mold body 20 is, when the male and female molds 1 and 2 are joined together with the male mold 1 received within the female mold 2, brought into tight contact with the male mating face 12 in the male mold 1 with no substantial gap formed therebetween to thereby avoid an undesirable lateral displacement of one of the male and female molds 1 and 2 relative to the other thereof. Also, the annular female abutment face 23 is adapted to be brought into tight contact with the annular male abutment face 13 in the male mold 1 as hereinbefore described, when the male and female molds 1 and 2 are joined together, to thereby position the male mold 1 relative to the female mold 2 in the axial direction.

The inner surface of the female mold body 20 furthermore has a first annular female shoulder 24 positioned generally intermediate between the engagement feature 22 and the annular female abutment face 23 and protruding radially outwardly from an upper edge of the engagement feature 22 so as to lie perpendicular to the engagement feature 22 and at a level one step below the female abutment face 23. This first annular female shoulder 24 is, when the male and female molds 1 and 2 are joined together, positioned spaced from the first annular male shoulder 14 in the male mold 1 with a slight gap formed between those first annular male and female shoulders 24 and 14.

The inner surface of the female mold body 20 is formed with an annular female inclined face 25 defined in a region upwardly of the female abutment face 23 and so inclined as to flare upwardly from an annular outer edge of the female abutment face 23 to an radially inner edge of a second annular female shoulder 26 that protrudes radially outwardly from an upper edge of the female inclined face 25. This female inclined face 25 and the second annular female shoulder 26 are so positioned relative to the male inclined face 15 and the second annular male shoulder 16 in the male mold 1 that when the male and female molds 1 and 2 are joined together, the female inclined face 25 and the second annular female shoulder 26 can be spaced from the male inclined face 15 and the second annular male shoulder 16, respectively, with corresponding slight gaps formed therebetween.

An annular upright female guide face 27 is formed in a region of the inner surface of the female mold body 20 immediately above the second annular female shoulder 26 so as to extend upwardly from a radially outer edge of the second annular female shoulder 26 and lies perpendicular to the second annular female shoulder 26 or parallel to the axis A. This annular upright female guide face 27 cooperates with the annular upright guide face 16 in the female mold 2 to guide one of the female and female molds 1 and 2 relative to the other thereof when the female and female molds 1 and 2 are joined together.

It is to be noted that a portion of the outer surface of the male mold body 10 and a corresponding portion of the inner surface of the female mold body 20, where the annular upright guide faces 17 and 27 are defined, respectively, are so sized relative to each other that the annular upright male guide face 17 can slide along the annular upright female guide face 27 during insertion of the male mold 1 into the female mold 2 in a direction along the axis A, but no appreciable gap will be formed therebetween of a size which would otherwise allow a lateral motion of one of the male and female molds 1 and 2 relative to the other in a direction generally perpendicular to the axis A.

In addition, the female mold body 20 has its annular top edges formed integrally with a radially outwardly extending flange 28. This flange 28 has anchor holes 29 equal in number to the number of the anchor projections 19 in the male mold 1, so that when the male and female molds 1 and 2 joined together, the anchor projections 19 can be engaged therein to avoid any lateral displacement of one of the molds 1 and 2 relative to the other. Although in the illustrated embodiment, the four anchor projections 19 and the correspondingly four anchor holes 29 are employed in the male and female molds 1 and 2, respectively, the number of the anchor projections 19 and the anchor holes 29 may not be limited thereto and at least two is satisfactory. However, the use of four or more, circumferentially equally spaced anchor projections 19 and the correspondingly four or more anchor holes 29 are feasible in the practice of the present invention.

Also, considering the workability desired during the mating of the male and female molds 1 and 2 together, each of the anchor projections 19 in Fig. 2 is preferably tapered downwardly from the associated flange 18 at an angle within the range of 3 to 15°, more preferably within the range of 5 to 12°.

Thus, it will readily be seen that the inner surface of the female mold body 20 is stepped in a region bound between the substantially round, spherically concaved molding surface area 21 and the radially outwardly extending flange 28 in a stepped shape complemental to the stepped shape of the outer surface of the male mold body 10, to thereby provide the engagement feature 22, the first annular female shoulder 24, the annular female abutment face 23, the annular female inclined face 25, the second annular female shoulder 26 and the annular female guide face 27, to describe sequentially from below.

The mold assembly in an assembled condition with the male and female molds 1 and 2 joined together is shown in a longitudinal sectional representation in Fig. 5. As shown therein, in this assembled condition, the mating faces 12 and 22 lying parallel to the axis A are held in tight contact with each other with no substantial gap formed therebetween and, the abutment faces 13 and 23 lying perpendicular to the axis A are abutted in the axial direction to be held in tight contact with each other. At the same time, the molding surface areas 11 and 21 in the male and female molds 1 and 2, respectively, are spaced a distance from each other with a. gap t of a predetermined size consequently formed therebetween. This gap t forms a molding cavity 30, the outer perimeter of which is bound by the mating faces 12 and 22 then held in tight contact with each other.

Each of the anchor projections 19 in the male mold 1 has a length greater than a thickness of the flange 28 in the female mold 2 and, accordingly, in the assembled condition as shown, a lower end of each anchor projection 19 protrudes downwardly outwardly through the corresponding anchor hole 29 in the flange 28. Accordingly, when the male and female molds 1 and 2 are desired to be separated from each other after the molding of the contact lens, the anchor projections 19 can be pushed upwardly from their lower ends to allow the male mold body 10 to separate from the female mold body 20, thereby facilitating the workability. It is, however, to be noted that the anchor projections 19 and the associated anchor holes 29 may be formed, in reverse to those shown and described, in the flange 28 of the female mold body 20 and the flange 18 of the male mold body 10, respectively.

In the assembled condition shown in Fig. 5, a contact lens material M is filled in the molding cavity 30 and is, while the male and female molds 1 and 2 are mated together under a predetermined pressure, caused to undergo polymerization to form a contact lens. The polymerization taking place within the molding cavity 30 may be either a thermal polymerization or a photo polymerization and may, in any event, be well known to those skilled in the art.

During the polymerization of the contact lens material M taking place within the molding cavity 30, the tight contact between the mating faces 12 and 22 effectively inhibits the male and female molds 1 and 2 from undergoing a lateral displacement relative to each other in a direction radially of the mold assembly and, at the same time, the tight contact between the abutment areas 13 and 23 effectively inhibits the male and female molds 1 and 2 from displacing relative to each other in an axial direction parallel to the axis A. Accordingly, any lateral and axial displacements of one of the male and female molds 1 and 2 relative to the other are prevented so effectively that the contact lens having an excellent optical performance, which is substantially free from an eccentricity, i.e., offset of the focal point from the optical axis, can be obtained.

In particular, as shown in Fig. 5, the mating faces 12 and 22 are formed in the outer and inner surfaces of the male and female mold bodies 10 and 20, respectively, in the vicinity of the outermost edge of the molding cavity 30, that is, in the vicinity of objects of which relative displacement is desired to be suppressed, so as to lie parallel to the axis A. Accordingly, the axial misalignment can be effectively avoided and, also, an undesirable formation of a flash in the outer perimeter of the eventually formed contact lens can be effectively avoided, which would otherwise result from a displacement of one of the male and female molds 1 and 2 relative to the other thereof.

Also, during the mating of the male and female molds 1 and 2, the male mold 1 can be inserted into the female mold 2 with the male guide face 17 in the male mold 1 slidingly guided along the female guide face 27 in the female mold 2 and, therefore, it is possible to accomplish an assured and smooth mating of the male and female molds 1 and 2. It is incidentally pointed out that even when one or both of the molds 1 and 2 is likely to deform considerably under the influence of heat evolved during the molding, firm engagement of the anchor projections 19 in the corresponding anchor holes 29 is effective to avoid a considerable lateral displacement of one of the molds 1 and 2 relative to the other thereof in the radial direction. Accordingly, with the mold assembly designed and tailored in accordance with the present invention, it is possible to obtain the contact lens having an excellent optical performance. In particular, since the relative lateral displacement of the molds 1 and 2 due to thermal expansions thereof can be effectively prevented as hereinbefore described, the mold assembly of the present invention is particularly advantageous where the thermal polymerization is employed.

When the male and female molds 1 and 2 are to be mated together, application of a pressure of within the range of 0.5 to 5 MPa, preferably within the range of 1 to 4 MPa is applied to the male and female molds 1 and 2. If this mating pressure is lower than the lowermost limit of 0.5 MPa, an optical offset would occur between the male and female molds 1 and 2 during the polymerization taking place within the molding cavity 30. On the other hand, if the mating pressure is larger than the uppermost limit of 5 MPa, there is a possibility of one or both of the male and female molds 1 and 2 being deformed.

As a material for each of the male and female molds 1 and 2, any suitable material having a stiffness or rigidity and a strength both sufficient to withstand the molding work to form the contact lens can be conveniently employed. By way of example, the material which can be employed for each of the male and female molds 1 and 2 may include synthetic resins, metals, glass and ceramics.

Considering, however, that the mold assembly for use in making the contact lens is generally used once or a few times and is then discarded, the use of inexpensive materials for the male and female molds 1 and 2 is preferred. Accordingly, a thermoplastic resin or a thermosetting resin such as, for example, polypropylene, polyethylene, polyethylene terephthalate, polystyrene, polycarbonate, polyvinyl chloride, polyamide, polyacetal or fluorocarbon resin can be advantageously used as a material for the male and female molds 1 and 2. Where a high mating accuracy is desired to be achieved between the male and female molds 1 and 2, a material having a stiffness with a modulus of bending elasticity of 800 MPa or higher, such as, for example, polypropylene, polyethylene, polyethylene terephthalate, polystyrene or polycarbonate is preferred.

For the contact lens material M to be molded to provide the contact lens, the use is preferred of a compound containing one or more of radically polymerizable vinyl groups, aryl groups, acrylic groups or methacrylic groups in its molecules, for, example, one or a mixture of a hydrophilic monomer such as (metha)acrylic acid, hydroxyl alkyl (metha)acrylate, polyethylene glycol (metha)acrylate, (metha)acrylic acid ester of a polyalcohol, N-vinyl lactam or acrylic amides; alkyl (metha)acrylate such as, for example, methyl methacrylate; carboxylic acid vinyl such as, for example, vinyl acetate; and a hydrophobic monomer such as itaconic acid ester, fumaric acid ester, styrene, fluoroalkyl (metha)acrylate or siloxanyl (metha)acrylate. Also, a radically polymerizable reactive polymer containing one or more of a radically polymerizable vinyl groups, aryl groups, acrylic groups or methacrylic groups in its molecules can also be used as a contact lens material M.

The contact lens material M referred to above preferably contain at least one hydrophilic monomer in order to enhance the wearing comfortability a wearer of the contact lenses may feel. Example of this hydrophilic monomer includes, for example, (metha)acrylic acid, 2-hydroxy ethyl (metha)acrylate, 2-hydroxy propyl (metha)acrylate, N,N-dimethyl acrylamide and N-vinyl-2-pyrrolidone.

In order for the eventually formed contact lens to have a form stability, the contact lens material M may preferably contain a form stabilizing agent such as one or a mixture of compounds of a kind containing two or more of a vinyl groups, aryl groups, acrylic groups or a methacrylic groups in its molecules. Examples of this compound includes, for example, ethylene glycol di(metha)acrylate, diethylene glycol di(metha)acrylate, triethylene glycol di(metha)acrylate, propylene glycol di(metha)acrylate, trimethylol propanetriol (metha)acrylate, pentaerythritol, tri(metha)acrylate, 1,4- butanediol di(metha)acrylate, 1,6-hexanediol di(metha)acrylate, glycerine di(metha)acrylate, divinyl benzene, diaryl phthalate, and diethylene glycol bisaryl carbonate. The amount of the form stabilizing agent contained in the contact lens material M may preferably be within the range of 0.1 to 30 wt% relative to the total weight of the polymerizable compound. If the content is smaller than 0.1 wt%, there is a tendency that the form stability of the contact lens may be lowered, whereas if the content is greater than 30 wt%, there is a tendency that the resultant contact lens will become fragile.

Also, the contact lens material M may contain a polymerization initiator appropriate to a polymerization process employed to form the contact lens. The polymerization process may be either a thermal polymerization or a photo polymerization, which can be chosen in consideration of characteristics of the polymerizable component such as, for example, the viscosity, the degree of volumetric shrinkage and the polymerizing rate. Where the thermal polymerization is effected to the polymerizable composition, any know polymerization initiator generally used in the manufacture of contact lenses can be employed. Examples of such polymerization initiator that can be contained in the contact lens material M as one or a mixture thereof include, for example, benzoyl peroxide, t-hexyl peroxy pivalate, lauroyl peroxide, 2,2'-azobisisobutyronitrile, 2,2'-azobis(2,4-dimethyl valeronitrile), 2,2'-azobis(4-methoxy-2,4-dimethyl valeronitrile), 2,2'-azobisisobutylate, 1,1'-azobis(cyclohexane-1-carbonitrile), and 2,2'-azobis(2-amidinopropane)dihydrochloride.

A thermal polymerizing apparatus is preferably of a type, in which the temperature can be controllable and the temperature distribution within the apparatus is minimal. Examples of the thermal polymerizing apparatus, which can be employed in the practice of the present invention, include a constant temperature bath having an agitating capability and a hot air circulating drier.

Where the photo polymerization is effected to the polymerizable composition, examples of the polymerization initiator that can be contained in the contact lens material M as one or a mixture thereof include, for example, benzoin, benzoin methyl ether, benzophenone, diethoxyacetophenone, 2-hydroxy-2-methyl-1-phenylpropane-1-on, d,1-camphorquinone, and 2,4,6-trimethyl benzoil diphenylphosfine oxide. During the photo polymerization, ultraviolet rays of light are radiated from at least one of the male and female molds with the polymerizable composition contained in the molding cavity.

In the practice of the present invention, where the contact lens is desired to be colored, any known coloring agent may be added to the biocompatible lens material M. Alternatively, after the formation of the contact lens, it may be dyed.

Although the present invention has been fully described in connection with the preferred embodiment thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

## Claims

1. A mold assembly for use in making a contact lens, which comprises:
male and female molds adapted to be joined together in an axial direction, which when they are joined together, a molding cavity complemental in shape to the contact lens is formed;
A pair of mating faces to be mated with each other, each defined in the male and female molds, respectively, at a location in the vicinity of an outer peripheral edge of a molding surface area in the associated male or female mold, and said each being in the form of an annular face lying substantially parallel to the axial direction;
A pair of abutment faces to be abutted to each, each defined in the male and female molds, respectively, at locations radially outwardly of the mating faces and being, when the male and female molds are joined together, operable to position the male and female molds relative to each other in the axial direction.

2. The mold assembly as claimed in Claim 1, further comprising a pair of guide faces, each defined in the male and female molds, respectively, at a location radially outwardly of the abutment face, and operable to guide the male and female molds in a mating direction.

3. The mold assembly as claimed in Claim 1 or 2, further comprising a plurality of anchoring projections formed in one of the male and female molds and a corresponding number of anchoring holes formed in the other of the male and female molds, the anchoring projections, when the male and female molds are joined together, engaging in the corresponding anchoring holes to avoid a relative displacement of the male and female molds in a radial direction generally perpendicular to the axial direction.

4. The mold assembly as claimed in Claim 1, 2 or 3, which is adapted for molding the contact lens by a thermal polymerization.
